# EUROPÄISCHE PATENTSCHRIFT

(11) **EP 0 731 281 B1**
(45) Veröffentlichungstag und Bekanntmachung des Hinweises auf die Patenterteilung: **03.05.2000**
(21) Anmeldenummer: 96102250.6
(22) Anmeldetag: 15.02.1996
(51) Int. Cl.: F16B 7/04

(54) **Zwischenstück für die Verbindung gleichartiger Stangenteile zur Bildung eines Stangenkörpers**
Intermediate element for connecting identical bars for mounting a bar body
Elément intermédiaire pour la fixation de barres identiques pour le montage d'un corps en forme de barre

(30) Priorität: 08.03.1995 DE 29503912 U
(43) Veröffentlichungstag der Anmeldung: 11.09.1996
(73) Patentinhaber: ROBERT BOSCH GMBH, 70442 Stuttgart (DE)
(72) Erfinder: Kaiser, Norbert, D-70567 Stuttgart (DE); Siegwart, Bernhard, Dipl.-Ing., D-71723 Grossbottwar (DE); Grabant, Peter, Ing., D-71686 Remseck (DE)

(56) Entgegenhaltungen:
- DE-A- 4 317 579
- DE-U- 9 300 403
- NL-A- 6 917 181
- US-A- 4 088 414

## Beschreibung

### Stand der Technik

Die Erfindung geht aus von einem Stangenkörper aus gleichartigen Stangenteilen nach der im Oberbegriff des Anspruchs 1 definierten Gattung.

Ein bekannter Stangenkörper dieser Art (DE-G 93 00 403.6) wird zumindest aus zwei koaxial hintereinander liegenden, als Hohlprofile ausgebildeten Stangenteilen und einem Zwischenstück gebildet. Das Zwischenstück ist passend in die einander zugekehrten Enden der Stangenteile einschiebbar und an der Außenseite mit Verdickungen versehen, die mit den einander zugekehrten Enden der Stangenteile in Eingriff bringbar sind. Die an der Außenseite des Zwischenstücks angebrachten Verdickungen sind als Nasen gestaltet, die an einem besonderen Prägevorgang aus dem Material des Zwischenstücks heraus gearbeitet werden.

Das vorstehend beschriebene Zwischenstück erfordert für seine Herstellung erheblichen Aufwand. Darüber hinaus erfüllt dieses Zwischenstück nicht die Erfordernisse an eine einfache, kostengünstige Herstellung in Verbindung mit der geforderten Toleranzempfindlichkeit.

Aus der DE 43 17 579 A1 ist eine Spannvorrichtung zwischen einer Hülse und einer Welle bekannt, bei der die Hülse als Spannhülse ausgebildet ist, welche die Welle am Umfang in einem konkav ausgebildeten Aufnahmebereich einspannt. Zu diesem Zweck ist am Außenumfang der Hülse ein in Umfangsrichtung verdrehbarer Spannring vorgesehen, der die Hülse umgreift und an deren Umfang mit einem oder mehreren, verteilt angeordneten, radialen Nocken angreift. Hierdurch wird eine radial einwärts gerichtete Kraft erzeugt zur Arretierung der Welle innerhalb der Hülse.

Aus der US-PS 4,088,414 ist eine Kupplung zur Verbindung zweier gleichartiger Stangenteile bekannt, welche ein in die Stangenteile eingebrachtes Zwischenstück aufweist. Dieses Zwischenstück hat ebenso wie die Stangenteile kreisförmigen Querschnitt und besitzt im mittleren Abschnitt eine umlaufende, wulstartige Verdickung, welche sich beim Zusammenschieben der Stangenteile und des zylindrischen Verbindungsstückes an der Verbindungsstelle umlaufend kraftschlüssig einfügt.

### Vorteile der Erfindung

Der erfindungsgemäße Stangenkörper mit den kennzeichnenden Merkmalen des Anspruchs 1 hat den Vorteil der einfachen Gestaltung, preisgünstigen Herstellung und Unempfindlichkeit. Es wird weiterhin durch die durch einfaches mechanisches Umformen gestalteten Ausbuchtungen in der Längsmitte des Zwischenstücks auch bei den größten vorkommenden Toleranzen der Innenbemessungen der zu verbindenden Stangenteile ein Durchrutschen sicher vermieden und eine Zentrierung der Enden der Stangenteile zueinander sicher erreicht.

Der grundlegende Gedanke vorliegender Erfindung besteht darin, das Zwischenstück im Bereich seiner Längsmitte durch mechanische Umformung mit drei die Verdickungen bildenden Ausbuchtungen zu versehen, die dem Zwischenstück einen örtlichen Radius verleihen, der größer ist als der Radius des Querschnitts des sonstigen Teils des Zwischenstücks bzw. des größten vorkommenden Innenradius der Stangenteile, wobei die Ausbuchtungen etwa im Winkel von 120° zueinander angeordnet sind, und im in die Stangenteile eingeschobenem Zustand beide Enden der Stangenteile zueinander ausrichten.

Durch die in den weiteren Ansprüchen aufgeführten Maßnahmen sind vorteilhafte Weiterbildungen des im Anspruch 1 definierten Zwischenstücks möglich.

Gemäß einer vorteilhaften Ausgestaltung der Erfindung sind Stangenteile und Zwischenstück rohrförmig, weisen im wesentlichen runden Querschnitt auf und bestehen aus Metall, vorzugsweise Eisen.

Entsprechend einer besonders vorteilhaften Weiterbildung der Erfindung, durch welche eine besonders gute, spielfreie, zentrierte und kostengünstige Verbindung der Stangenteile, auch bei weiten Toleranzabweichungen, erzielt wird, besteht darin, daß auf die Enden des Zwischenstücks Kunststoffstopfen aufgesetzt sind, wobei diese Kunststoffstopfen einen äußeren Rand aufweisen, der so bemessen und gestaltet ist, daß er sich an das Innenprofil der Stangenteile anpaßt, wenn das Zwischenstück mit dem Kunststoffstopfen in das Stangenteil eingeführt ist. In vorteilhafter Ausgestaltung ist der Rand des Kunststoffstopfens mit verformbaren Zähnen, vorzugsweise einer Vielzahl von Zähnen, besetzt.

### Zeichnung

Die Erfindung ist anhand eines in der Zeichnung dargestellten Ausführungsbeispiels in der nachfolgenden Beschreibung näher erläutert. Es zeigen:
- Fig. 1: im Schnittbild schematisch einen Stangenkörper, der aus zwei Stangenteilen und einem diese verbindenden erfindungsgemäß gestalteten Zwischenstück besteht;
- Fig. 2: schematisch in Seitenansicht das erfindungsgemäß gestaltete Zwischenstück;
- Fig. 3: schematisch die Schnittansicht gemäß der Linie A-A von Fig. 2 mit den erfindungsgemäß gestalteten radial vergrößerten Ausbuchtungen;
- Fig. 4: schematisch im Schnittbild einen auf die Enden des Zwischenstücks aufschiebbaren Kunststoffstopfens, und
- Fig. 5: schematisch in Draufsicht den Kunststoffstopfen von Fig. 4.

### Beschreibung des Ausführungsbeispiels

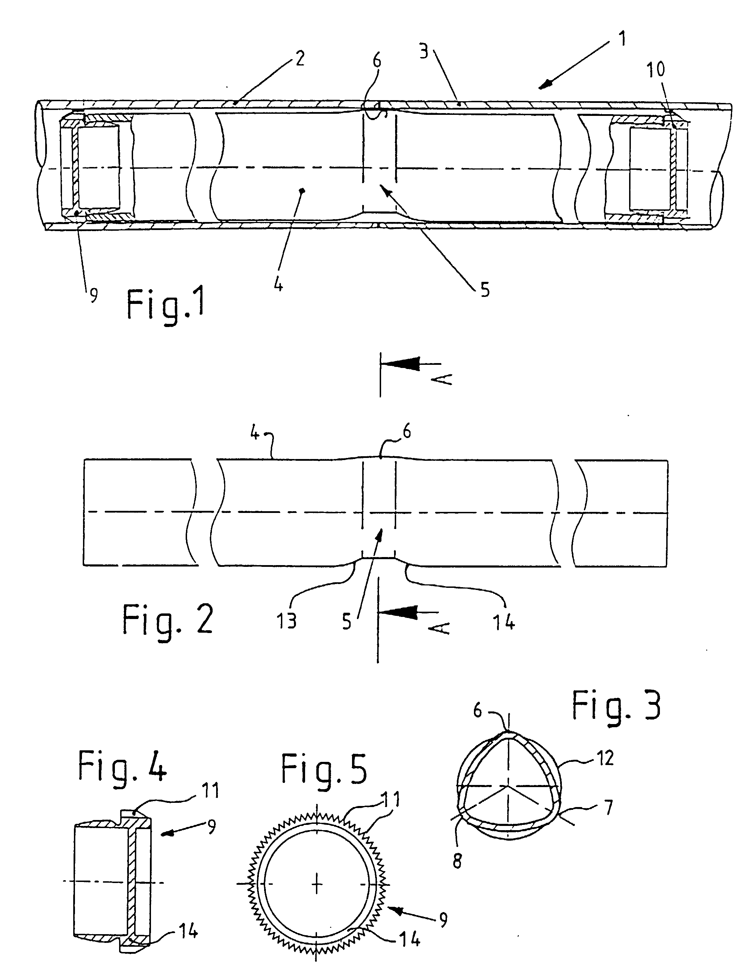

In Fig. 1 ist im Schnittbild schematisch ein Stangenkörper 1 dargestellt, der aus zwei Stangenteilen 2, 3 und einem diese verbindenden erfindungsgemäß gestalteten Zwischenstück 4 besteht. Das Zwischenstück 4 besitzt im Bereich 5, angeordnet in der Mitte der Längsausdehnung des Zwischenstücks 4, kurz gesagt in seiner Längsmitte, drei Ausbuchtungen 6, 7, 8, von denen in Fig. 1 die Ausbuchtung 6 sichtbar dargestellt ist. Die Ausbuchtungen 6, 7 und 8 insgesamt sind am besten in Fig. 3 erkennbar. Diese Ausbuchtungen werden auf sehr einfache Weise durch mechanische Umformung des Bereichs 5 geformt.

Wie in Fig. 1 weiterhin dargestellt, sind auf die beiden Enden des Zwischenstücks 4 Kunststoffstopfen 9 und 10 aufsetzbar. Diese Kunststoffstopfen 9 und 10 passen sich beim Einführen in die Stangenteile 2 und 3 deren Innenprofil bestens an, gleichen dabei weite Toleranzen aus und liegen immer an der Innenseite an. Dadurch ist über die Berührungspunkte zwischen den Ausbuchtungen 6, 7 und 8 des Zwischenstücks 4 mit den beiden sich gegenüberstehenden Enden der Stangenteile 2 und 3 und den beiden Rändern der beiden Kunststoffstopfen 9 und 10 eine stabile Art von Dreipunktlagerung in Längsrichtung des Stangenkörpers 1 erzielt. Dieser wirkt damit wie ein einziges Bauteil.

In der Fig. 2 ist schematisch in Seitenansicht das erfindungsgemäß gestaltete Zwischenstück 4 allein dargestellt. Die Teile außerhalb des durch die mechanische Umformung mit den Ausbuchtungen 6, 7, 8 versehenen Bereichs 5, der in der Praxis eine Breite von ca. 1 cm haben kann, sind im Querschnitt rund. Dies ist durch den Kreis 12 in Fig. 3 angedeutet. In der Praxis kann bei einem Durchmesser von ca. 2,7 cm das Zwischenstück eine Länge von etwa 27 cm aufweisen. Dadurch ist auch im Zusammenspiel mit den beiden Kunststoffstopfen 9 und 10 die besonders stabile Dreipunktlagerung in axialer Richtung zur Bildung eines steifen Stangenkörpers erzielbar. Die Stangenteile 2 und 3 sowie das Zwischenstück 4 sind aus Metall, bevorzugt aus Kostengründen, aus Eisen gefertigt.

In Fig. 3 ist schematisch die Schnittansicht gemäß der Linie A-A von Fig. 2 mit den erfindungsgemäß gestalteten radial vergrößerten Ausbuchtungen 6, 7, 8 dargestellt. Es ist gut erkennbar, daß die Spitzen der jeweiligen Ausbuchtungen über den Radius des mit 12 bezeichneten Kreises hinausragen. Dieser Kreis 12 stellt den Außenumfang des Zwischenstücks 4 in den nicht durch die mechanische Umformung betroffenenen Teilen, also außerhalb des Bereichs 5 in Fig. 2 und auch außerhalb der Übergangsbereiche 13 und 14, siehe Fig. 2, dar. Die Ausbuchtungen 6, 6 und 8 stehen in einem Winkel von ca. 120° zueinander. Sie werden von Radien gebildet, die enger sind als der Radius des Zwischenteils 4. Der die Ausbuchtungen verbindende Radius ist größer als der Radius des Zwischenteils 4. In der in Fig. 3 gezeigten Darstellung erinnert die so gebildete Konfiguration an die Gestalt eines Rotationskolben.

In Fig. 4 ist schematisch im Schnittbild und in Fig. 5 schematisch in Draufsicht ein auf die Enden des Zwischenstücks 4 aufschiebbarer Kunststoffstopfen 9 dargestellt. Der Kunststoffstopfen 9 weist einen relativ stabilen umlaufenden Rand 14 auf, der von einer Scheibe 13, die für Querstabilität sorgt, gehalten ist. An der Außenseite des Randes 14 sind Zähne 11, vorzugsweise in einer größeren Anzahl, angeordnet. Diese Zähne 11 passen sich aufgrund ihrer Verformbarkeit beim Einführen des Zwischenstücks 4 in die Stangenteile 2 und 3 deren Innendurchmesser gut an.

Beim Verbinden der beiden Stangenteile 2 und 3 zu einem Stangenkörper 1 wird das Zwischenteil 4 mit den Kunststoffstopfen 9 und 10 in die jeweiligen Enden der Stangenteile eingedrückt bzw. Eingeschlagen. Durch den mittels der mechanischen Umformung entstandenen drei Ausbuchtungen 6, 7 und 8 ist an drei Punkten der Außendurchmesser des Zwischenstücks 4 so vergrößert, daß dieser größer ist als der durch Toleranzen auftretende größte Innendurchmesser der zu verbindenden Stangenteile 2 und 3. Somit wird ein Durchrutschen des Zwischenstücks verhindert. Es sitzt zu gleichen Teilen in den sich gegenüber stehenden Enden der verbundenen Teile. Dabei hat wiederum eine mehr oder weniger große Umformung stattgefunden, die Ausbuchtungen haben sich nach innen verschoben. Da die Ausbuchtungen an drei Stellen des Umfangs vorhanden sind, zentrieren sie die Enden der Stangenteile.

Durch die erfindungsgemäße Gestaltung des Zwischenstücks 4 allein, aber auch besonders vorteilhaft in Kombination mit den aufgesteckten Kunststoffstopfen, können Rohrprofile einfacher Herstellung, bei denen die Anforderungen an die Einhaltung von engen Toleranzen niedrig gehalten sind, Verwendung finden. Das Zwischenstück 4 nimmt in vorteilhafter Weise Biege-, Scher- und Torsionskräfte auf und zentriert die sich gegenüber stehenden Enden der zu verbindenden Stangenteile 2 und 3. Dadurch ist mit einfachen, in der Einhaltung von Toleranzen stark schwankenden Bauteilen ein letztlich doch sehr genau ausgerichteter und gut tragfähiger Stangenkörper in kostengünstiger Weise zur Verfügung gestellt.

## Patentansprüche

1. Stangenkörper aus gleichartigen Stangenteilen und mindestens einem Zwischenstück zur Verbindung der gleichartigen Stangenteile, insbesondere Gleitschiene eines Garagentorantrieb, wobei der Stangenkörper (1) zumindest aus zwei koaxial hintereinanderliegenden, als Hohlprofile ausgebildeten Stangenteile (2, 3) und dem Zwischenstück (4) besteht, welches passend in die einander zugekehrten Enden der Stangenteile (2, 3) einschiebbar ist und an der Außenseite Verdickungen enthält, die mit den einander zugekehrten Enden der Stangenteile in Eingriff bringbar sind, dadurch gekennzeichnet, daß das Zwischenstück (4) im Bereich (5) seiner Längsmitte durch mechanische Umformung mit drei die Verdickungen bildenden Ausbuchtungen (6, 7, 8) versehen ist, die dem Zwischenstück (4) einen örtlichen Radius verleihen, der größer ist als der Radius des Querschnitts des sonstigen Teils des Zwischenstücks bzw. des größten vorkommenden Innenradius der Stangenteile (2, 3), die Ausbuchtungen (6, 7, 8) etwa im Winkel von 120° zueinander angeordnet sind, und im in die Stangenteile (2, 3) eingeschobenem Zustand beide Enden der Stangenteile (2, 3) zueinander ausrichten.

2. Stangenkörper nach Anspruch 1, dadurch gekennzeichnet, daß Stangenteile (2, 3) und Zwischenstück (4) rohrförmig sind, im wesentlichen runden Querschnitt aufweisen und aus Metall vorzugsweise aus Eisen bestehen.

3. Stangenkörper nach Anspruch 1 oder 2 dadurch gekennzeichnet, daß auf die Enden des Zwischenstücks (4) Kunststoffstopfen (9, 10) aufsetzbar sind, daß diese Kunststoffstopfen (9, 10) einen äußeren Rand (14) aufweisen, der so bemessen und gestaltet ist, daß er an das Innenprofil der Stangenteile (2, 3) anpaßbar ist, wenn das Zwischenstück (4) mit dem Kunststoffstopfen (9, 10) in das Stangenteil (9 bzw. 10) eingeführt ist.

4. Stangenkörper nach Anspruch 3, dadurch gekennzeichnet, daß der Rand (14) des Kunststoffstopfens (9 bzw. 10) mit verformbaren Zähnen (11), vorzugsweise einer Vielzahl von Zähnen, besetzt ist.

## Claims

1. Bar element made of identical bar components and at least one intermediate element connecting the identical bar components, in particular sliding rail of a drive for a garage door, the bar element (1) being composed of at least two bar components (2, 3) which lie one behind the other in a coaxial arrangement and are embodied as hollow sections, and the intermediate element (4) which can be inserted in a fitting fashion into the ends of the bar components (2, 3) which face one another, and contains on the outside thickened portions which can be brought into engagement with the ends of the bar components which face one another, characterized in that the intermediate element (4) is provided in the vicinity (5) of its longitudinal centre, by means of mechanical deformation, with three bulging-out portions (6, 7, 8) which form the thickened portions and give the intermediate element (4) a local radius which is greater than the radius of the cross section of the other part of the intermediate element or of the largest internal radius occurring in the bar components (2, 3), the bulging-out portions (6, 7, 8) are arranged with respect to one another at an angle of approximately 120°, and, in the state of insertion into the bar components (2, 3), align the two ends of the bar components (2, 3) with respect to one another.

2. Bar element according to Claim 1, characterized in that the bar components (2, 3) and intermediate element (4) are tubular, have an essentially round cross section and are composed of metal, preferably of iron.

3. Bar element according to Claim 1 or 2, characterized in that plastic stoppers (9, 10) can be fitted onto the ends of the intermediate element (4), in that these plastic stoppers (9, 10) have an outer edge (14) which is dimensioned and shaped in such a way that it can be fitted onto the internal profile of the bar components (2, 3) if the intermediate element (4) is introduced, with the plastic stopper (9, 10), into the bar component (9 or 10).

4. Bar element according to Claim 3, characterized in that the edge (14) of the plastic stopper (9 or 10) is provided with deformable teeth (11), preferably a large number of teeth.

## Revendications

1. Barre formée de parties identiques et d'au moins une pièce intermédiaire pour relier les parties de barre identiques, notamment rails de portes de garages motorisées, la barre (1) étant formée d'au moins deux parties de barre (2, 3) coaxialement placées l'une derrière l'autre, en forme de profilé creux, et d'une pièce intermédiaire (4),
cette pièce intermédiaire se glissant dans les extrémités en regard de la partie de barre (2, 3) et
celle-ci comporte sur son côté extérieur des bossages qui se mettent en prise avec les extrémités en regard des parties de barre,
caractérisée en ce que
la pièce intermédiaire (4) comporte, au niveau (5) de son milieu longitudinal, trois bossages (6, 7, 8) formant des renforcements réalisés par déformation mécanique,
ces bossages donnant à la pièce intermédiaire (4) un rayon local supérieur au rayon de la section de la partie restante de la pièce intermédiaire ou du plus grand rayon intérieur existant pour les parties de barre (2, 3),
les bossages (6, 7, 8) étant décalés sensiblement sur un angle de 120° et
à l'état engagé dans les parties de barre (2, 3), les deux extrémités des parties de barre (2, 3) sont alignées.

2. Barre selon la revendication 1,
caractérisée en ce que
les parties de barre (2, 3) de la pièce intermédiaire (4) sont tubulaires avec une section essentiellement circulaire et ces parties sont en métal, de préférence en fer.

3. Barre selon la revendication 1 ou 2,
caractérisée en ce que
- les extrémités de la pièce intermédiaire (4) reçoivent des bouchons en matière plastique (9, 10),
- ces bouchons en matière plastique (9, 10) ayant un bord extérieur (14) dimensionné et formé pour s'adapter au profil intérieur des parties de barre (2, 3) lorsque la pièce intermédiaire (4) avec les bouchons en matière plastique (9, 10) est introduite dans la partie de barre (9, 10).

4. Barre selon la revendication 3,
caractérisée en ce que
le bord (14) du bouchon en matière plastique (9, 10) est muni de dents déformables (11), de préférence d'un grand nombre de dents.
